(19) **Europäisches Patentamt / European Patent Office / Office européen des brevets**

(11) **EP 4 590 065 A1**

(12) **EUROPEAN PATENT APPLICATION**
published in accordance with Art. 153(4) EPC

(43) Date of publication:
23.07.2025 Bulletin 2025/30

(21) Application number: 23865843.9

(22) Date of filing: 13.09.2023

(51) International Patent Classification (IPC):
H04W 76/19 (2018.01)    H04W 76/14 (2018.01)
H04W 76/18 (2018.01)    H04W 24/08 (2009.01)
H04W 88/04 (2009.01)

(52) Cooperative Patent Classification (CPC):
H04W 24/08; H04W 76/14; H04W 76/18;
H04W 76/19; H04W 88/04

(86) International application number:
PCT/KR2023/013720

(87) International publication number:
WO 2024/058547 (21.03.2024 Gazette 2024/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.09.2022 KR 20220115181

(71) Applicant: LG Electronics Inc.
Yeongdeungpo-gu
Seoul 07336 (KR)

(72) Inventors:
• BACK, Seoyoung
  Seoul 06772 (KR)
• LEE, Youngdae
  Seoul 06772 (KR)
• LEE, Seungmin
  Seoul 06772 (KR)
• PARK, Giwon
  Seoul 06772 (KR)
• KIM, Laeyoung
  Seoul 06772 (KR)
• KIM, Seokjung
  Seoul 06772 (KR)

(74) Representative: Plasseraud IP
104 Rue de Richelieu
CS92104
75080 Paris Cedex 02 (FR)

(54) **OPERATING METHOD OF UE RELATED TO RRC RECONFIGURATION IN MULTI-PATH RELAY OPERATION IN WIRELESS COMMUNICATION SYSTEM**

(57) One embodiment relates to an operating method of a remote user equipment (UE) related to a multi-path relay in a wireless communication system, the method comprising steps in which a remote UE: establishes a radio resource control (RRC) connection with a base station; establishes a PC5 RRC connection with a relay UE; transmits, to a base station, data through a direct path and/or an indirect path; detects a radio link failure (RLF); and reports the RLF to the base station, wherein, on the basis that the RLF is generated on the indirect path, the remote UE reports, to the base station, together with the RLF report, IDs of one or more candidate relay UEs and a measurement result for the one or more candidate relay UEs.

FIG. 16

- establish RRC connection with gNB — S1601
- establish PC5 RRC connection with relay UE — S1602
- transmit data to gNB through at least one of direct path or indirect path — S1603
- detect RLF — S1604
- report RLF to gNB — S1605

# EP 4 590 065 A1

## Description

## TECHNICAL FIELD

The following description relates to a wireless communication system, and more particularly, to a method and apparatus for operating a remote UE in relation to RRC reconfiguration in a multi-path relay operation.

## BACKGROUND

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

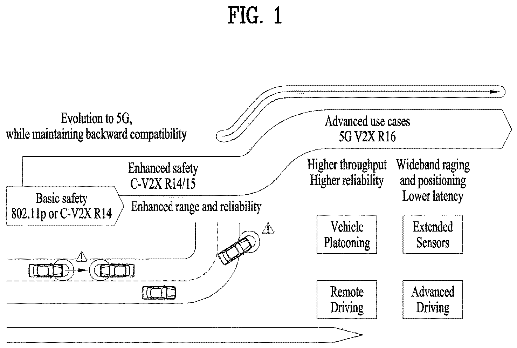

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DISCLOSURE

## TECHNICAL PROBLEM

The present disclosure addresses issues related to RRC reconfiguration in a multi-path relay operation.

## TECHNICAL SOLUTION

According to an embodiment, a method of operating a remote user equipment (UE) related to multi-path relay in a wireless communication system includes establishing a radio resource control (RRC) connection with a base station (BS) by the remote UE, establishing a PC5 RRC connection with a relay UE by the remote UE, transmitting data to the BS through at least one of a direct path or an indirect path by the remote UE, detecting radio link failure (RLF) by the remote UE, and reporting the RLF to the BS by the remote UE. Based on the RLF occurring on the indirect path, the remote UE reports to the BS an ID of at least one candidate relay UE and a measurement result for the at least one candidate relay UE, together with the RLF report.

According to an embodiment, a remote UE in a wireless communication system includes at least one processor, and at least one computer memory operatively connected to the at least one processor, and storing instructions that, when executed, cause the at least one processor to perform operations. The operations include establishing an RRC connection with a BS, establishing a PC5 RRC connection with a relay UE, transmitting data to the BS through at least one of a direct path or an indirect path, detecting RLF, and reporting the RLF to the BS. Based on the RLF occurring on the indirect path, the remote UE reports to the BS an ID of at least one candidate relay UE and a measurement result for the at least one candidate relay UE, together with the RLF report.

According to an embodiment, in a non-volatile computer-readable storage medium storing at least one computer program including instructions that, when executed by at least one processor, cause the at least one processor to perform operations for a UE, the operations include establishing an RRC connection with a BS, establishing a PC5 RRC connection with a relay UE, transmitting data to the BS through at least one of a direct path or an indirect path, detecting RLF, and reporting the RLF to the BS. Based on the RLF occurring on the indirect path, the remote UE reports to the BS an ID of at least one candidate relay UE and a measurement result for the at least one candidate relay UE, together with the RLF report.

The remote UE may receive an RRCReconfiguration message related to one of the at least one candidate relay UE from the BS.

The remote UE may establish a PC5 RRC connection with the one candidate relay UE based on the RRCReconfiguration message.

The measurement result for the at least one candidate relay UE may be equal to or greater than a preset threshold.

The RLF may be reported via the direct path.

Based on the indirect link on which the RLF occurs being a primary path, the remote UE may release the direct link and performs relay reselection.

Based on the direct link being the primary path, the remote UE may release the connection with the relay UE.

The primary path may be a path through which the remote UE establishes the PC5 RRC connection or a path through which the remote UE transmits/receives a control signal.

The measurement result may be one of reference signal received power (RSRP) or reference signal received quality (RSRQ).

Based on the RLF occurring on the direct path, the remote UE may report to the BS at least one cell ID belonging to the same gNB as the remote UE and a measurement result related to the at least one cell ID, together with the RLF report.

## ADVANTAGEOUS EFFECTS

According to an embodiment, reporting a measurement result for a candidate path together may help with fast recovery.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

FIG. 1 is a diagram for explaining comparison between vehicle-to-everything (V2X) communication based on pre-new radio (NR) radio access technology (RAT) and V2X communication based on NR.

FIG. 2 illustrates the structure of a Long Term Evolution (LTE) system according to an embodiment of the present disclosure.

FIG. 3 illustrates radio protocol architectures for user and control planes according to an embodiment of the present disclosure.

FIG. 4 illustrates the structure of a new radio (NR) system according to an embodiment of the present disclosure.

FIG. 5 illustrates a functional division between a next generation radio access network (NG-RAN) and a fifth-generation core (5GC) according to an embodiment of the present disclosure.

FIG. 6 illustrates the structure of a radio frame of NR to which embodiment(s) are applicable.

FIG. 7 illustrates the structure of a slot in an NR frame according to an embodiment of the present disclosure.

FIG. 8 illustrates a radio protocol architecture for sidelink (SL) communication according to an embodiment of the present disclosure.

FIG. 9 illustrates a radio protocol architecture for SL communication according to an embodiment of the present disclosure.

FIG. 10 illustrates a synchronization source or synchronization reference of V2X according to an embodiment of the present disclosure.

FIG. 11 illustrates a procedure for a user equipment (UE) to perform V2X or SL communication depending on transmission modes according to an embodiment of the present disclosure..

FIG. 12 illustrates a procedure for performing path switching by a UE according to an embodiment of the present disclosure.

FIG. 13 illustrates direct to indirect path switching.

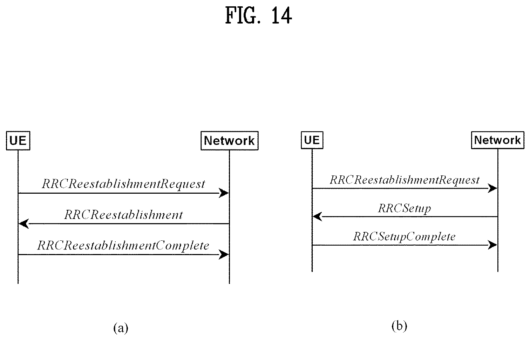

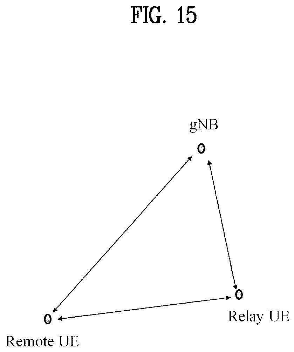

FIGS. 14 to 16 are diagrams illustrating an embodiment.

FIGS. 17 to 23 are diagrams illustrating various devices to which embodiment(s) are applicable.

## DETAILED DESCRIPTION

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

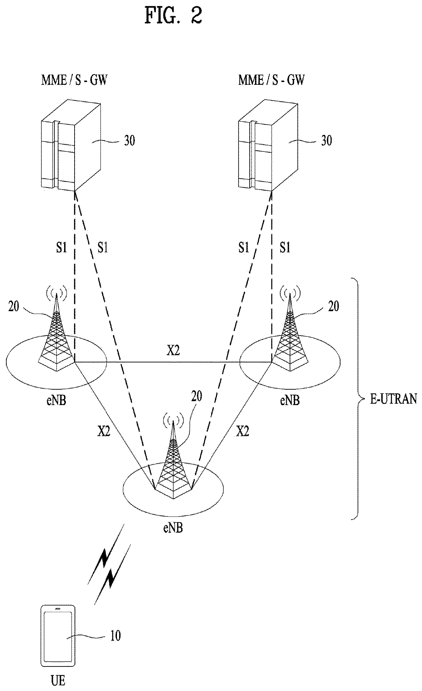

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

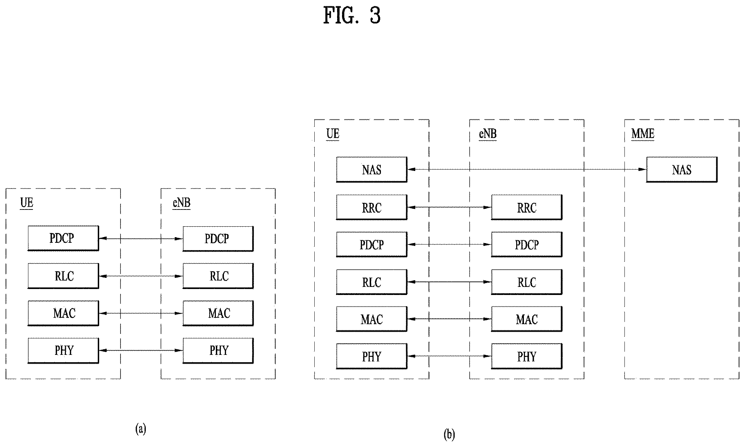

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

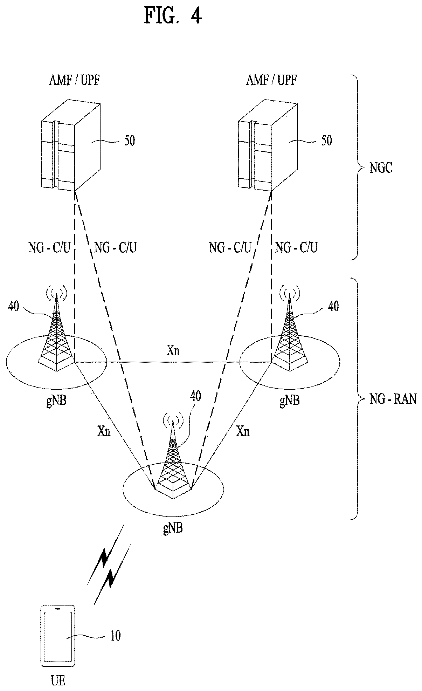

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

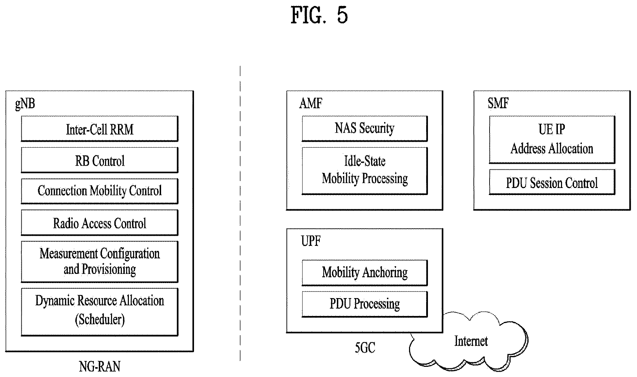

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

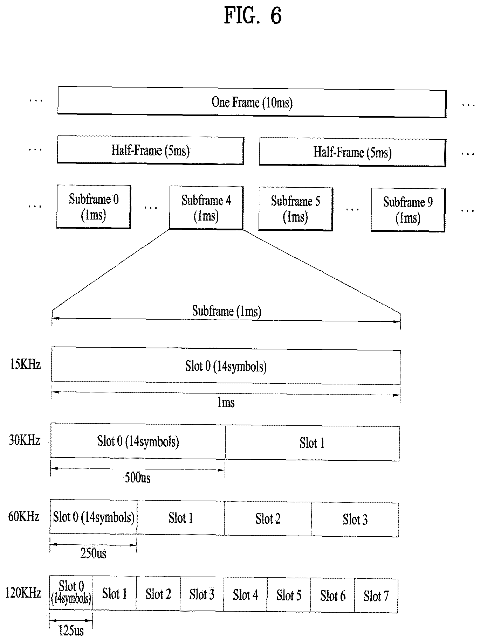

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

[Table 1] below lists the number of symbols per slot Nslotsymb, the number of slots per frame Nframe,uslot, and the number of slots per subframe Nsubframe,uslot according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

[Table 2] below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{s}$ lot |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15kHz, a wide area in traditional cellular bands may be supported, while with an SCS of 30kHz/60kHz, a dense urban area, a lower latency, and a wide carrier bandwidth may be supported. With an SCS of 60kHz or higher, a bandwidth larger than 24.25GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6GHz range" and FR2 may be an "above 6GHz range" called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerals in a frequency range may be changed in the NR system. For example, FR1 may range from 410MHz to 7125MHz as listed in [Table 4]. That is, FR1 may include a frequency band of 6GHz (or 5850, 5900, and 5925MHz) or above. For example, the frequency band of 6GHz (or 5850, 5900, and 5925MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

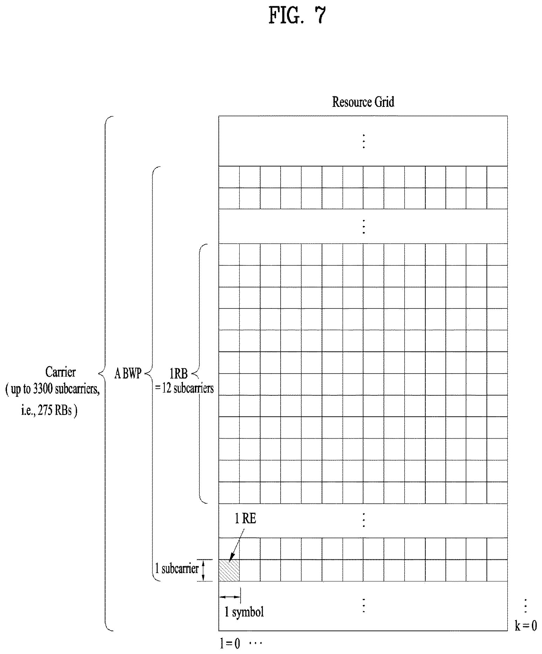

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

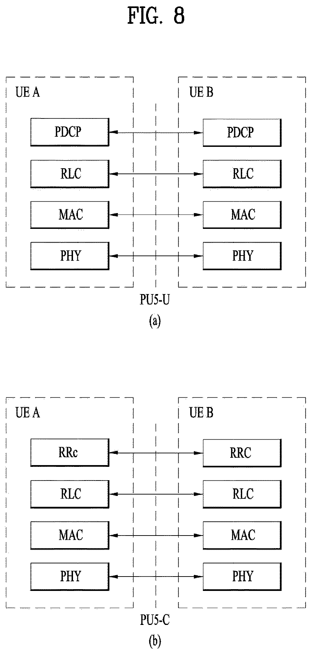

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

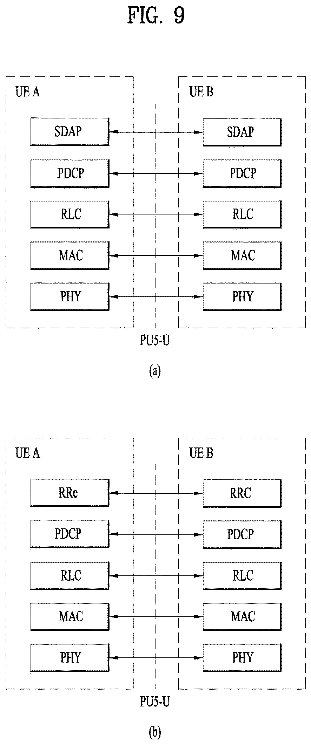

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

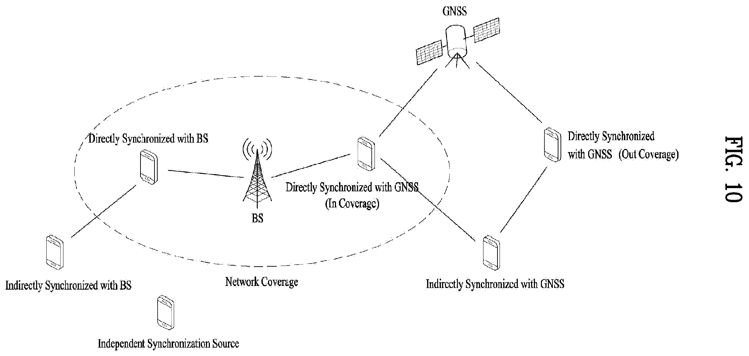

FIG. 10 illustrates a synchronization source or synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in

**EP 4 590 065 A1**

network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

SL synchronization sources may be associated with synchronization priority levels. For example, a relationship between synchronization sources and synchronization priorities may be defined as shown in Table 5 or 6. Table 5 or 6 is merely an example, and the relationship between synchronization sources and synchronization priorities may be defined in various ways.

[Table 5]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 6]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with GNSS |
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining UE(s) with low priority | Remaining UE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) UL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or preconfigured). Therefore, the UE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting UE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

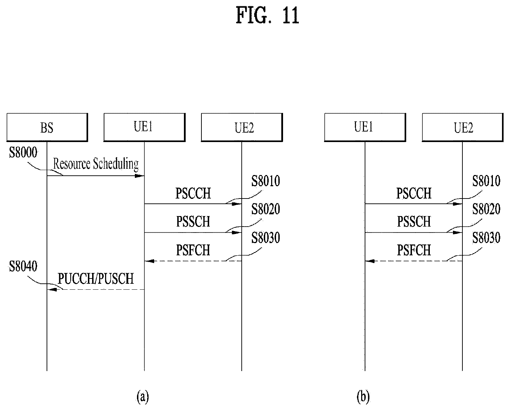

FIG. 11 illustrates a procedure of performing V2X or SL communication by a UE depending on a transmission mode according to an embodiment of the present disclosure. The embodiment of FIG. 11 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI for activation or release of the CG resource to the first UE.

In step S8010, the first UE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

7.3.1.4.1 Format 3_0

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - $\lceil \log_2 I \rceil$ bits, where I is the number of resource pools for transmission configured by the higher layer parameter *sl-TxPoolScheduling.*

- Time gap - 3 bits determined by higher layer parameter *sl-DCI-ToSL-Trans,* as defined in clause 8.1.2.1 of [6, TS 38.214]

- HARQ process number - 4 bits.

- New data indicator - 1 bit.

- Lowest index of the subchannel allocation to the initial transmission - $\lceil \log_2(N_{\text{subChannel}}^{\text{SL}}) \rceil$ bits as defined in clause 8.1.2.2 of [6, TS 38.214]

- SCI format 1-A fields according to clause 8.3.1.1:

- Frequency resource assignment.

- Time resource assignment.

- PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits

- 2 bits as defined in clause 16.5.2 of [5, TS 38.213] if the UE is configured with pdsch-*HARQ-ACK-Codebook = dynamic*

- 2 bits as defined in clause 16.5.1 of [5, TS 38.213] if the UE is configured with pdsch-*HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

7.3.1.4.2 Format 3_1

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

- Timing offset - 3 bits determined by higher layer parameter *sl-TimeOffsetEUTRA-List,* as defined in clause 16.6 of [5, TS 38.213]

- Carrier indicator -3 bits as defined in 5.3.3.1.9A of [11, TS 36.212].

(continued)

---

- Lowest index of the subchannel allocation to the initial transmission - $\left\lceil \log_2(N^{\mathrm{SL}}_{\mathrm{subchannel}}) \right\rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

- SL index - 2 bits as defined in 5.3.3.1.9A of [11, TS 36.212]

- SL SPS configuration index - 3 bits as defined in clause 5.3.3.1.9A of [11, TS 36.212].

- Activation/release indication - 1 bit as defined in clause 5.3.3.1.9A of [11, TS 36.212].

---

Referring to FIG. 11 (b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

---

8.3.1.1 SCI format 1-A

SCI format 1-A is used for the scheduling of PSSCH and 2nd-stage-SCI on PSSCH The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment - $\left\lceil \log_2(\dfrac{N^{\mathrm{SL}}_{\mathrm{subChannel}}\left(N^{\mathrm{SL}}_{\mathrm{subChannel}}+1\right)}{2}) \right\rceil$ bits when the value of the higher layer parameter *sl-MaxNumPerReserve* is configured to 2; otherwise

$\left\lceil \log_2(\dfrac{N^{\mathrm{SL}}_{\mathrm{subChannel}}\left(N^{\mathrm{SL}}_{\mathrm{subChannel}}+1\right)\left(2N^{\mathrm{SL}}_{\mathrm{subChannel}}+1\right)}{6}) \right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{\mathrm{rsv\_period}} \right\rceil$ bits as defined in clause 16.4 of [5, TS 38.213], where $N_{\mathrm{rsv\_period}}$ is the number of entries in the higher layer parameter *sl-ResourceReservePeriodList,* if higher layer parameter *sl-MultiReserveResource* is configured; 0 bit otherwise.

---

(continued)

> - DMRS pattern - $\lceil \log_2 N_{\text{pattern}} \rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.*
> - 2nd-stage SCI format - 2 bits as defined in Table 8.3.1.1-1.
> - Beta_offset indicator - 2 bits as provided by higher layer parameter *sl-BetaOffsets2ndSCI* and Table 8.3.1.1-2.
> - Number of DMRS port - 1 bit as defined in Table 8.3.1.1-3.
> - Modulation and coding scheme - 5 bits as defined in clause 8.1.3 of [6, TS 38.214].
> - Additional MCS table indicator - as defined in clause 8.1.3.1 of [6, TS 38.214]: 1 bit if one MCS table is configured by higher layer parameter *sl-Additional-MCS-Table;* 2 bits if two MCS tables are configured by higher layer parameter *sl-Additional-MCS-Table;* 0 bit otherwise.
> - PSFCH overhead indication - 1 bit as defined clause 8.1.3.2 of [6, TS 38.214] if higher layer parameter *sl-PSFCH-Period* = 2 or 4; 0 bit otherwise.
> - Reserved - a number of bits as determined by higher layer parameter *sl-NumReservedBits,* with value set to zero.

Table 9 shows exemplary 2nd-stage SCI formats.

[Table 9]

> 8.4 Sidelink control information on PSSCH
>
> SCI carried on PSSCH is a 2nd-stage SCI, which transports sidelink scheduling information.
>
> 8.4.1 2nd-stage SCI formats
>
> The fields defined in each of the 2nd-stage SCI formats below are mapped to the information bits $a_0$ to $a_{A-1}$ as follows:
>
> Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$. 8.4.1.1 SCI format 2-A
>
> SCI format 2-A is used for the decoding of PSSCH, with HARQ operation when HARQ-ACK information includes ACK or NACK, when HARQ-ACK information includes only NACK, or when there is no feedback of HARQ-ACK information.
>
> The following information is transmitted by means of the SCI format 2-A:
>
> - HARQ process number - 4 bits.
> - New data indicator - 1 bit.
> - Redundancy version - 2 bits as defined in Table 7.3.1.1.1-2.
> - Source ID - 8 bits as defined in clause 8.1 of [6, TS 38.214].
> - Destination ID - 16 bits as defined in clause 8.1 of [6, TS 38.214].
> - HARQ feedback enabled/disabled indicator - 1 bit as defined in clause 16.3 of [5, TS 38.213].
> - Cast type indicator - 2 bits as defined in Table 8.4.1.1-1 and in clause 8.1 of [6, TS 38.214].
> - CSI request - 1 bit as defined in clause 8.2.1 of [6, TS 38.214] and in clause 8.1 of [6, TS 38.214].

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

> 16.3 UE procedure for reporting HARQ-ACK on sidelink
>
> A UE can be indicated by an SCI format scheduling a PSSCH reception to transmit a PSFCH with HARQ-ACK information in response to the PSSCH reception. The UE provides HARQ-ACK information that includes ACK or NACK, or only NACK.
>
> A UE can be provided, by *sl-PSFCH-Period,* a number of slots in a resource pool for a period of PSFCH transmission occasion resources. If the number is zero, PSFCH transmissions from the UE in the resource pool are disabled.

A UE expects that a slot $t'^{SL}_k \ (0 \le k < T'_{max})$ has a PSFCH transmission occasion resource if $k$ mod $N^{PSFCH}_{PSSCH} = 0$, where $t'^{SL}_k$ is defined in [6, TS 38.214], and $T'_{max}$ is a number of slots that belong to the resource pool within 10240 msec according to [6, TS 38.214], and $N^{PSFCH}_{PSSCH}$ is provided by *sl-PSFCH-Period.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception.

A UE is provided by *sl-PSFCH-RB-Set* a set of $M^{PSFCH}_{PRB, set}$ PRBs in a resource pool for PSFCH transmission in a PRB of the resource pool. For a number of $N_{subch}$ sub-channels for the resource pool, provided by *sl-NumSubchannel,* and a number of PSSCH slots associated with a PSFCH slot that is less than or equal to $N^{PSFCH}_{PSSCH}$, the UE allocates the $\left[ \left( i + j \cdot N^{PSFCH}_{PSSCH} \right) \cdot M^{PSFCH}_{subch, slot}, \left( i + 1 + j \cdot N^{PSFCH}_{PSSCH} \right) \cdot M^{PSFCH}_{subch, slot} - 1 \right]$ PRBs from the $M^{PSFCH}_{PRB, set}$ PRBs to slot i among the PSSCH slots associated with the PSFCH slot and sub-channel *j,* where $M^{PSFCH}_{subch, slot} = M^{PSFCH}_{PRB, set} / \left( N_{subch} \cdot N^{PSFCH}_{PSSCH} \right), 0 \le i < N^{PSFCH}_{PSSCH}$, $0 \le j < N_{subch}$, and the allocation starts in an ascending order of i and continues in an ascending order of *j.* The UE expects that $M^{PSFCH}_{PRB, set}$ is a multiple of $N_{subch} \cdot N^{PSFCH}_{PSSCH}$.

The second OFDM symbol *l'* of PSFCH transmission in a slot is defined as *l' = sl-StartSymbol + sl-LengthSymbols - 2 .*

A UE determines a number of PSFCH resources available for multiplexing HARQ-ACK information in a PSFCH transmission as $R^{PSFCH}_{PRB, CS} = N^{PSFCH}_{type} \cdot M^{PSFCH}_{subch, slot} \cdot N^{PSFCH}_{CS}$ where $N^{PSFCH}_{CS}$ is a number of cyclic shift pairs for the resource pool provided by *sl-NumMuxCS-Pair* and, based on an indication by *sl PSFCH CandidateResourceType,*

- if *sl-PSFCH-CandidateResourceType* is configured as *startSubCH,* $N^{PSFCH}_{type} = 1$ and the $M^{PSFCH}_{subch, slot}$ PRBs are associated with the starting sub-channel of the corresponding PSSCH;

- if *sl-PSFCH-CandidateResourceType* is configured as *allocSubCH,* $N^{PSFCH}_{type} = N^{PSSCH}_{subch}$ and the $N^{PSSCH}_{subch} \cdot M^{PSFCH}_{subch, slot}$ PRBs are associated with the $N^{PSSCH}_{subch}$ sub-channels of the subch slot subch corresponding PSSCH.

The PSFCH resources are first indexed according to an ascending order of the PRB index, from the $N^{PSFCH}_{type} \cdot M^{PSFCH}_{subch, slot}$ PRBs, and then according to an ascending order of the cyclic shift pair index from the $N^{PSFCH}_{CS}$ cyclic shift pairs.

(continued)

| A UE determines an index of a PSFCH resource for a PSFCH transmission in response to a PSSCH reception as $(P_{\mathrm{ID}} + M_{\mathrm{ID}})\, mod\, R_{\mathrm{PRB,CS}}^{\mathrm{PSFCH}}$ where $P_{\mathrm{ID}}$ is a physical layer source ID provided by SCI format 2-A or 2-B [5, TS 38.212] scheduling the PSSCH reception, and $M_{\mathrm{ID}}$ is the identity of the UE receiving the PSSCH as indicated by higher layers if the UE detects a SCI format 2-A with Cast type indicator field value of "01"; otherwise, $M_{\mathrm{ID}}$ is zero. A UE determines a $m_0$ value, for computing a value of cyclic shift $\alpha$ [4, TS 38.211], from a cyclic shift pair index corresponding to a PSFCH resource index and from $N_{\mathrm{CS}}^{\mathrm{PSFCH}}$ using Table 16.3-1. |

Referring to FIG. 11(a), in step S8040, the first UE may transmit SL HARQ feedback to the BS over a PUCCH and/or PUSCH based on Table 11.

[Table 11]

| 16.5 UE procedure for reporting HARQ-ACK on uplink |
| --- |
| A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0. |
| For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources. |
| For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0. |
| From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable |
| - for one or more PSFCH reception occasions associated with SCI format 2-A with Cast type indicator field value of "10" |
| - generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK |
| - for one or more PSFCH reception occasions associated with SCI format 2-A with Cast type indicator field value of "01" |
| - generate ACK if the UE determines ACK from at least one PSFCH reception occasion, from the number of PSFCH reception occasions corresponding to PSSCH transmissions, in PSFCH resources corresponding to every identity $M_{\mathrm{ID}}$ of the UEs that the UE expects to receive the PSSCH, as described in clause 16.3; otherwise, generate NACK |
| - for one or more PSFCH reception occasions associated with SCI format 2-B or SCI format 2-A with Cast type indicator field value of "11" |
| - generate ACK when the UE determines absence of PSFCH reception for the last PSFCH reception occasion from the number of PSFCH reception occasions corresponding to PSSCH transmissions; otherwise, generate NACK |
| After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information. |
| The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission. |

(continued)

The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

5.10.11.4 Selection and reselection of sidelink relay UE

A UE capable of sidelink remote UE operation that is configured by upper layers to search for a sidelink relay UE shall:

if out of coverage on the frequency used for sidelink communication, as defined in TS 36.304 [4], clause 11.4; or if the serving frequency is used for sidelink communication and the RSRP measurement of the cell on which the UE camps (RRC_IDLE)/ the PCell (RRC_CONNECTED) is below *threshHigh* within *remoteUE-Config :*

2> search for candidate sidelink relay UEs, in accordance with TS 36.133 [16]

2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3(out of coverage), before using the SD-RSRP measurement results;

NOTE 1: The details of the interaction with upper layers are up to UE implementation.

2> if the UE does not have a selected sidelink relay UE:

3> select a candidate sidelink relay UE which SD-RSRP exceeds *q-RxLevMin* included in either *reselectionInfoIC* (in coverage) or *reselectionInfoOoC* (out of coverage) by *minHyst;*

2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection):

3> select a candidate sidelink relay UE which SD-RSRP exceeds *q-RxLevMin* included in either *reselectionInfoIC* (in coverage) or *reselectionInfoOoC* (out of coverage) by *minHyst;*

2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst:*

3> consider no sidelink relay UE to be selected;

NOTE 2: The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation.

5.10.11.5 Sidelink remote UE threshold conditions

A UE capable of sidelink remote UE operation shall:

1> if the threshold conditions specified in this clause were not met:

2> if *threshHigh* is not included in *remoteUE-Config* within *SystemInformationBlockType19;* or

2> if *threshHigh* is included in *remoteUE-Config* within *SystemInformationBlockType19;* and the RSRP measurement of the PCell, or the cell on which the UE camps, is below *threshHigh* by *hystMax* (also included within *remoteUE-Config*):

3> consider the threshold conditions to be met (entry); else:

2> if *threshHigh* is included in *remoteUE-Config* within *SystemInformationBlockType19;* and the RSRP measurement of the PCell, or the cell on which the UE camps, is above *threshHigh* (also included within *remoteUE-Config*):

3> consider the threshold conditions not to be met (leave);

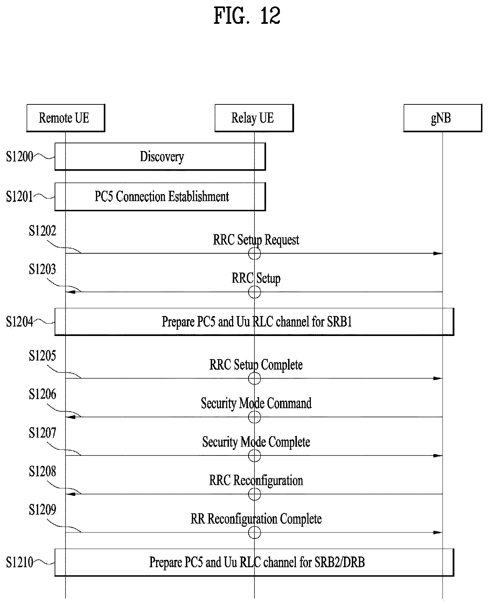

FIG. 12 shows connection management captured in the TR document (3GPP TR 38.836) related to Rel-17 NR SL and a procedure for path switching from direct to indirect. A remote UE needs to establish its own PDU session/DRB with a network before user plane data transmission.

A PC5 unicast link establishment procedure in terms of PC5-RRC of Rel-16 NR V2X may be reused to establish a secure unicast link for L2 UE-to-network relaying between the remote UE and a relay UE before the remote UE establishes a Uu RRC connection with the network through the relay UE.

For both in-coverage and out-of-coverage, when the remote UE initiates a first RRC message for connection establishment with a gNB, a PC5 L2 configuration for transmission between the remote UE and the UE-to-network relay UE may be based on an RLC/MAC configuration defined in the standard. Establishment of Uu SRB1/SRB2 and DRB of the remote UE complies with a legacy Uu configuration procedure for L2 UE-to-network relay.

A high-level connection establishment procedure shown in FIG. 12 is applied to the L2 UE-to-network relay.

In operation S1200, the remote and relay UEs may perform a discovery procedure and establish a PC5-RRC connection in operation S1201 based on the existing Rel-16 procedure.

In operation S1202, the remote UE may transmit a first RRC message (i.e., RRCSetupRequest) for connection establishment with the gNB through the relay UE by using a default L2 configuration of PC5. The gNB responds to the remote UE with an RRCSetup message (S1203). Transmission of RRCSetup to the remote UE uses a default configuration of PC5. When the relay UE does not start in RRC_CONNECTED, the relay UE needs to perform its own connection setup upon receiving a message about the default L2 configuration of PC5. In this operation, details for the relay UE to transmit the RRCSetupRequest/RRCSetup message to the remote UE may be discussed in stage WI.

In operation S1204, the gNB and the relay UE perform a relay channel setup procedure via Uu. According to the configuration of the gNB, the relay/remote UE establishes an RLC channel for relaying SRB1 with the remote UE via PC5. In this operation, a relay channel for SRB1 is prepared.

In operation S1205, the remote UE SRB1 message (e.g., RRCSetupComplete message) is transmitted to the gNB via the relay UE by using the SRB1 relay channel via PC5. The remote UE performs RRC connection via Uu.

In operation S1206, the remote UE and the gNB configure security according to a legacy procedure, and a security message is transmitted through the relay UE.

In operation S1210, the gNB configures an additional RLC channel between the gNB and the relay UE for traffic relay. According to the configuration of the gNB, the relay/remote UE configures an RLC channel between the remote UE and the relay UE for traffic relay. The gNB transmits RRCReconfiguration to the remote UE through the relay UE to configure relay SRB2/DRB. The remote UE transmits RRCReconfigurationComplete in response to the gNB through the relay UE.

For L2 UE-to-network relay in addition to connection establishment procedure:

- The RRC reconfiguration and RRC disconnection procedures may reuse legacy RRC procedures with the message content/configuration design left to stage WI.
- RRC connection reconfiguration and RRC connection resumption procedures may reuse the existing RRC procedure as a baseline by considering the connection establishment procedure of the above L2 UE-to-network relay to handle a relay-specific part along with message content/configuration design. The message content/configuration may be defined later.

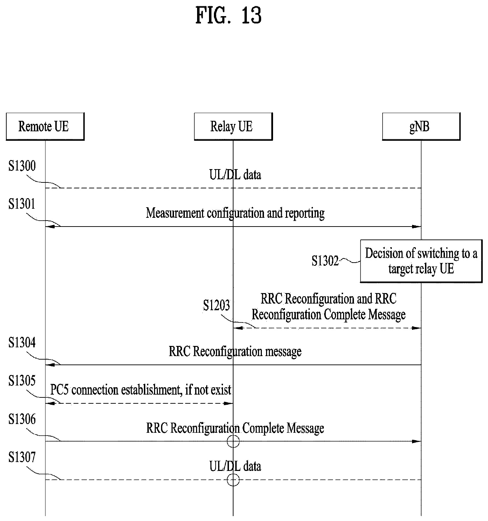

FIG. 13 illustrates direct to indirect path switching. For service continuity of L2 UE-to-network relay, the procedure in FIG. 13 may be used when a remote UE switches to an indirect relay UE.

Referring to FIG. 13, in operation S1301, the remote UE measures/discovers a candidate relay UE and then reports one or several candidate relay UEs. The remote UE may filter out an appropriate relay UE that meets higher layer standard during reporting. The report may include the ID and SL RSRP information of the relay UE, and in this case, the PC5 measurement details may be determined later.

In operation S1302, the gNB determines to switch to a target relay UE and the target (re)configuration is optionally transmitted to the relay UE.

In operation S1304, the RRC reconfiguration message for the remote UE may include the ID of the target relay UE, target Uu, and PC5 configuration.

In operation S1305, the remote UE establishes a PC5 connection with the target relay UE when the connection is not established.

In operation S1306, the remote UE feeds back RRCReconfigurationComplete to the gNB via a target path by using the target configuration provided in RRCReconfiguration.

In operation S1307, a data path is switched.

[Table 13]

The purpose of this procedure is to re-establish the RRC connection. A UE in RRC_CONNECTED, for which AS security has been activated with SRB2 and at least one DRB/multicast MRB setup or, for IAB, SRB2, may initiate the procedure in order to continue the RRC connection. The connection re-establishment succeeds if the network is able to find and verify a valid UE context or, if the UE context cannot be retrieved, and the network responds with an *RRCSetup* according to clause 5.3.3.4.

The network applies the procedure e.g as follows:

- When AS security has been activated and the network retrieves or verifies the UE context:

- to re-activate AS security without changing algorithms;

- to re-establish and resume the SRB1;

- When UE is re-establishing an RRC connection, and the network is not able to retrieve or verify the UE context:

- to discard the stored AS Context and release all RBs and BH RLC channels and Uu Relay RLC channels;

- to fallback to establish a new RRC connection.

If AS security has not been activated, the UE shall not initiate the procedure but instead moves to RRC_IDLE directly, with release cause 'other'. If AS security has been activated, but SRB2 and at least one DRB or multicast MRB or, for IAB, SRB2, are not setup, the UE does not initiate the procedure but instead moves to RRC_IDLE directly, with release cause 'RRC connection failure'.

**5.3.7.2 Initiation**

The UE initiates the procedure when one of the following conditions is met:

1> upon detecting radio link failure of the MCG and *t316* is not configured, in accordance with 5.3.10; or

1> upon detecting radio link failure of the MCG while SCG transmission is suspended, in accordance with 5.3.10; or

1> upon detecting radio link failure of the MCG while PSCell change or PSCell addition is ongoing, in accordance with 5.3.10; or

1> upon detecting radio link failure of the MCG while the SCG is deactivated, in accordance with 5.3.10; or

1> upon re-configuration with sync failure of the MCG, in accordance with clause 5.3.5.8.3; or

1> upon mobility from NR failure, in accordance with clause 5.4.3.5; or

1> upon integrity check failure indication from lower layers concerning SRB1 or SRB2, except if the integrity check failure is detected on the *RRCReestablishment* message; or

1> upon an RRC connection reconfiguration failure, in accordance with clause 5.3.5.8.2; or

1> upon detecting radio link failure for the SCG while MCG transmission is suspended, in accordance with clause 5.3.10.3 in NR-DC or in accordance with TS 36.331 [10] clause 5.3.11.3 in NE-DC; or

1> upon reconfiguration with sync failure of the SCG while MCG transmission is suspended in accordance with clause 5.3.5.8.3; or

1> upon SCG change failure while MCG transmission is suspended in accordance with TS 36.331 [10] clause 5.3.5.7a; or

1> upon SCG configuration failure while MCG transmission is suspended in accordance with clause 5.3.5.8.2 in NR-DC or in accordance with TS 36.331 [10] clause 5.3.5.5 in NE-DC; or

1> upon integrity check failure indication from SCG lower layers concerning SRB3 while MCG is suspended; or

1> upon T316 expiry, in accordance with clause 5.7.3b.5; or

1> upon detecting sidelink radio link failure by L2 U2N Remote UE in RRC_CONNECTED, in accordance with clause 5.8.9.3; or

1> upon reception of *NotificationMessageSidelink* including *indicationType* by L2 U2N Remote UE in RRC_CONNECTED, in accordance with clause 5.8.9.10; or

1> upon PC5 unicast link release indicated by upper layer at L2 U2N Remote UE in RRC_CONNECTED.

Upon initiation of the procedure, the UE shall:

1> stop timer T310, if running;

1> stop timer T312, if running;

1> stop timer T304, if running;

[Table 14]

1> start timer T311;

1> stop timer T316, if running;

1> if UE is not configured with *attemptCondReconfig*:

2>reset MAC;

2>release *spCellConfig,* if configured;

2> suspend all RBs, and BH RLC channels for IAB-MT, and Uu Relay RLC channels for L2 U2N Relay UE, except SRB0 and broadcast MRBs;

2>release the MCG SCell(s), if configured;

2>if MR-DC is configured:

  3>perform MR-DC release, as specified in clause 5.3.5.10;

2>release *delayBudgetReportingConfig,* if configured and stop timer T342, if running;

2>release *overheatingAssistanceConfig,* if configured and stop timer T345, if running;

2>release *idc-AssistanceConfig,* if configured;

2>release *btNameList,* if configured;

2>release *wlanNameList,* if configured;

2>release *sensorNameList,* if configured;

2>release *drx-PreferenceConfig* for the MCG, if configured and stop timer T346a associated with the MCG, if running;

2>release *maxBW-PreferenceConfig* for the MCG, if configured and stop timer T346b associated with the MCG, if running;

2>release *maxCC-PreferenceConfig* for the MCG, if configured and stop timer T346c associated with the MCG, if running;

2>release *maxMIMO-LayerPreferenceConfig* for the MCG, if configured and stop timer T346d associated with the MCG, if running;

2>release *minSchedulingOffsetPreferenceConfig* for the MCG, if configured stop timer T346e associated with the MCG, if running;

2>release *rlm-RelaxationReportingConfig* for the MCG, if configured and stop timer T346j associated with the MCG, if running;

2>release *bfd-RelaxationReportingConfig* for the MCG, if configured and stop timer T346k associated with the MCG, if running;

2>release *releasePreferenceConfig,* if configured stop timer T346f, if running;

2>release *onDemandSIB-Request* if configured, and stop timer T350, if running;

2>release *referenceTimePreferenceReporting,* if configured;

2>release *sl-AssistanceConfigNR,* if configured;

2>release *obtainCommonLocation,* if configured;

2>release *musim-GapAssistanceConfig,* if configured and stop timer T346h, if running;

2>release *musim-LeaveAssistanceConfig,* if configured;

  2>release *ul-GapFR2-PreferenceConfig,* if configured;

  2>release *scg-DeactivationPreferenceConfig,* if configured, and stop timer T346i, if running;

  2>release *propDelayDiffReportConfig,* if configured;

  2>release *rrm-MeasRelaxationReportingConfig,* if configured;

1> release *successHO-Config,* if configured;

  1> if any DAPS bearer is configured:

  2>reset the source MAC and release the source MAC configuration;

  2>for each DAPS bearer:

(continued)

> 3>release the RLC entity or entities as specified in TS 38.322 [4], clause 5.1.3, and the associated logical channel for the source SpCell;
>
> 2> reconfigure the PDCP entity to release DAPS as specified in TS 38.323 [5];
>
> 2>for each SRB:
>
> > 3>release the PDCP entity for the source SpCell;
> >
> > 3>release the RLC entity as specified in TS 38.322 [4], clause 5.1.3, and the associated logical channel for the source SpCell;
>
> 2>release the physical channel configuration for the source SpCell;

[Table 15]

> 2> discard the keys used in the source SpCell (the $K_{gNB}$ key, the $K_{RRCenc}$ key, the $K_{RRCint}$ key, the $K_{U\text{-}Pint}$ key and the $K_{UPenc}$ key), if any;
>
> 1> release *sl-L2RelayUE-Config,* if configured;
>
> 1> release *sl-L2RemoteUE-Config,* if configured;
>
> 1> release the SRAP entity, if configured;
>
> 1> if the UE is acting as L2 U2N Remote UE:
>
> 2>if the PC5-RRC connection with the U2N Relay UE is determined to be released:
>
> > 3>perform the PC5-RRC connection release as specified in 5.8.9.5;
> >
> > 3>perform either cell selection in accordance with the cell selection process as specified in TS 38.304 [20], or relay selection as specified in clause 5.8.15.3, or both;
>
> 2>else:
>
> > 3>maintain the PC5 RRC connection and stop T311 if running;
>
> NOTE 1: It is up to Remote UE implementation whether to release or keep the current PC5 unicast link.
>
> 1> else:
>
> 2>perform cell selection in accordance with the cell selection process as specified in TS 38.304 [20].
>
> NOTE 2: For L2 U2N Remote UE, if both a suitable cell and a suitable relay are available, the UE can select either one based on its implementation.
>
> **5.3.7.3 Actions following cell selection while T311 is running**
>
> Upon selecting a suitable NR cell, the UE shall:
>
> 1> ensure having valid and up to date essential system information as specified in clause 5.2.2.2;
>
> 1> stop timer T311;
>
> 1> if T390 is running:
>
> 2> stop timer T390 for all access categories;
>
> 2>perform the actions as specified in 5.3.14.4;
>
> 1> stop the relay (re)selection procedure, if ongoing;
>
> 1> if the cell selection is triggered by detecting radio link failure of the MCG or re-configuration with sync failure of the MCG or mobility from NR failure, and
>
> 1> if *attemptCondReconfig* is configured; and
>
> 1> if the selected cell is not configured with *CondEventT1,* or the selected cell is configured with *CondEventT1* and leaving condition has not been fulfilled; and
>
> 1> if the selected cell is one of the candidate cells for which the *reconfigurationWithSync* is included in the *masterCellGroup* in *VarConditionalReconfig:*
>
> 2>if the UE supports RLF-Report for conditional handover, set the *choCellId* in the *VarRLF-Report* to the global cell identity, if available, otherwise to the physical cell identity and carrier frequency of the selected cell;
>
> 2> apply the stored *condRRCReconfig* associated to the selected cell and perform actions as specified in 5.3.5.3;
>
> NOTE 1: It is left to network implementation to how to avoid keystream reuse in case of CHO based recovery after a failed handover without key change.
>
> 1> else:

(continued)

> 2>if UE is configured with *attemptCondReconfig:*
>> 3>reset MAC;
>> 3>release *spCellConfig,* if configured;
>
> 3>release the MCG SCell(s), if configured;
>
> 3>release *delayBudgetReportingConfig,* if configured and stop timer T342, if running;
>
> 3>release *overheatingAssistanceConfig ,* if configured and stop timer T345, if running;
>
> 3>if MR-DC is configured:
>> 4>perform MR-DC release, as specified in clause 5.3.5.10;
>
> 3>release *idc-AssistanceConfig,* if configured;
>
> 3>release *btNameList,* if configured;
>
> 3>release *wlanNameList,* if configured;
>
> 3>release *sensorNameList,* if configured;
>
> 3>release *drx-PreferenceConfig* for the MCG, if configured and stop timer T346a associated with the MCG, if running;
>
> 3>release *maxBW-PreferenceConfig* for the MCG, if configured and stop timer T346b associated with the MCG, if running;

[Table 16]

> 3>release *maxCC-PreferenceConfig* for the MCG, if configured and stop timer T346c associated with the MCG, if running;
>
> 3>release *maxMIMO-LayerPreferenceConfig* for the MCG, if configured and stop timer T346d associated with the MCG, if running;
>
> 3>release *minSchedulingOffsetPreferenceConfig* for the MCG, if configured and stop timer T346e associated with the MCG, if running;
>
> 3>release *rlm-RelaxationReportingConfig* for the MCG, if configured and stop timer T346j associated with the MCG, if running;
>
> 3>release *bfd-RelaxationReportingConfig* for the MCG, if configured and stop timer T346k associated with the MCG, if running;
>
> 3>release *releasePreferenceConfig,* if configured and stop timer T346f, if running;
>
> 3>release *onDemandSIB-Request* if configured, and stop timer T350, if running;
>
> 3>release referenceTimePreferenceReporting, if configured;
>
> 3>release *sl-AssistanceConfigNR,* if configured;
>
> 3>release *obtainCommonLocation,* if configured;
>
> 3>release *scg-DeactivationPreferenceConfig,* if configured, and stop timer T346i, if running;
>
> 3>release *musim-GapAssistanceConfig,* if configured and stop timer T346h, if running;
>
> 3>release *musim-LeaveAssistanceConfig,* if configured;
>
> 3>release *propDelayDiffReportConfig,* if configured;
>
> 3>release *ul-GapFR2-PreferenceConfig,* if configured;
>
> 3>release *rrm-MeasRelaxationReportingConfig,* if configured;
>
> 3> suspend all RBs, and BH RLC channels for the IAB-MT, except SRBO;
>
> 2>remove all the entries within *VarConditionalReconfig,* if any;
>
> 2>for each *measId,* if the associated *reportConfig* has a *reportType* set to *condTriggerConfig:*
>> 3>for the associated *reportConfigId:*
>>> 4>remove the entry with the matching *reportConfigId* from the *reportConfigList* within the *VarMeasConfig;*
>> 3>if the associated *measObjectId* is only associated to a *reportConfig* with *reportType* set to *condTriggerConfig:*
>>> 4>remove the entry with the matching *measObjectId* from the *measObjectList* within the *VarMeasConfig;*
>> 3>remove the entry with the matching *measId* from the *measIdList* within the *VarMeasConfig;*
>
> 2> start timer T301;

(continued)

2>apply the default L1 parameter values as specified in corresponding physical layer specifications except for the parameters for which values are provided in *SIB1*;

2> apply the default MAC Cell Group configuration as specified in 9.2.2;

2> apply the CCCH configuration as specified in 9.1.1.2;

2> apply the *timeAlignmentTimerCommon* included in *SIB1*;

2>initiate transmission of the *RRCReestablishmentRequest* message in accordance with 5.3.7.4;

NOTE 2: This procedure applies also if the UE returns to the source PCell.

Upon selecting an inter-RAT cell, the UE shall:

1> perform the actions upon going to RRC_IDLE as specified in 5.3.11, with release cause 'RRC connection failure'.

### 5.3.7.3a Actions following relay selection while T311 is running

Upon selecting a suitable L2 U2N Relay UE, the L2 U2N Remote UE shall:

1> ensure having valid and up to date essential system information as specified in clause 5.2.2.2;

1> stop timer T311;

1> if T390 is running:

2> stop timer T390 for all access categories;

2>perform the actions as specified in 5.3.14.4;

1> stop the cell (re)selection procedure, if ongoing;

1> start timer T301;

1> apply the specified configuration of SL-RLC0 as specified in 9.1.1.4;

1> apply the SDAP configuration and PDCP configuration as specified in 9.1.1.2 for SRB0;

1> initiate transmission of the *RRCReestablishmentRequest* message in accordance with 5.3.7.4.

[Table 17]

### 5.3.7.4 Actions related to transmission of *RRCReestablishmentRequest* message

The UE shall set the contents of *RRCReestablishmentRequest* message as follows:

1> if the procedure was initiated due to radio link failure as specified in 5.3.10.3 or reconfiguration with sync failure as specified in 5.3.5.8.3:

2> set the *reestablishmentCellId* in the *VarRLF-Report* to the global cell identity of the selected cell;

1> set the *ue-Identity* as follows:

2>set the *c-RNTI* to the C-RNTI used in the source PCell (reconfiguration with sync or mobility from NR failure) or used in the PCell in which the trigger for the reestablishment occurred (other cases);

2>set the *physCellId* to the physical cell identity of the source PCell (reconfiguration with sync or mobility from NR failure) or of the PCell in which the trigger for the re-establishment occurred (other cases);

2>set the *shortMAC-I* to the 16 least significant bits of the MAC-I calculated:

3>over the ASN.1 encoded as per clause 8 (i.e., a multiple of 8 bits) *VarShortMAC-Input;*

3>with the $K_{RRCint}$ key and integrity protection algorithm that was used in the source PCell (reconfiguration with sync or mobility from NR failure) or of the PCell in which the trigger for the re-establishment occurred (other cases); and

3>with all input bits for COUNT, BEARER and DIRECTION set to binary ones;

1> set the *reestablishmentCause* as follows:

2>if the re-establishment procedure was initiated due to reconfiguration failure as specified in 5.3.5.8.2:

3> set the *reestablishmentCause* to the value *reconfigurationFailure;*

2>else if the re-establishment procedure was initiated due to reconfiguration with sync failure as specified in 5.3.5.8.3 (intra-NR handover failure) or 5.4.3.5 (inter-RAT mobility from NR failure):

3> set the *reestablishmentCause* to the value *handoverFailure*;

2>else:

3> set the *reestablishmentCause* to the value *otherFailure;*

1> re-establish PDCP for SRB1;

1> if the UE is acting as L2 U2N Remote UE:

(continued)

| |
|---|
| **5.3.7.4 Actions related to transmission of *RRCReestablishmentRequest* message** |
| 2> establish or re-established (e.g. via release and add) SL RLC entity for SRB1; |
| 2> apply the default configuration of SL-RLC1 as defined in 9.2.4 for SRB1; |
| 2> apply the default configuration of PDCP as defined in 9.2.1 for SRB1; |
| 2> establish the SRAP entity and apply the default configuration of SRAP as defined in 9.2.5 for SRB1; |
| 1> else: |
| 2>re-establish RLC for SRB1; |
| 2> apply the default configuration defined in 9.2.1 for SRB1; |
| 1> configure lower layers to suspend integrity protection and ciphering for SRB1; |
| NOTE: Ciphering is not applied for the subsequent *RRCReestablishment* message used to resume the connection. An integrity check is performed by lower layers, but merely upon request from RRC. |
| 1> resume SRB1; |
| 1> submit the *RRCReestablishmentRequest* message to lower layers for transmission. |
| **5.3.7.5 Reception of the *RRCReestablishment* by the UE** |
| The UE shall: |
| 1> stop timer T301; |
| 1> consider the current cell to be the PCell; |
| 1> update the $K_{gNB}$ key based on the current $K_{gNB}$ key or the NH, using the received *nextHop-ChainingCount* value, as specified in TS 33.501 [11]; |
| 1> store the *nextHopChainingCount* value indicated in the *RRCReestablishment* message; |
| 1> derive the $K_{RRCenc}$ and $K_{UPenc}$ keys associated with the previously configured *cipheringAlgorithm,* as specified in TS 33.501 [11]; |
| 1> derive the $K_{RRCint}$ and $K_{UPint}$ keys associated with the previously configured *integrityProtAlgorithm,* as specified in TS 33.501 [11]. |
| 1> request lower layers to verify the integrity protection of the *RRCReestablishment* message, using the previously configured algorithm and the $K_{RRCint}$ key; |
| 1> if the integrity protection check of the *RRCReestablishment* message fails: |
| 2>perform the actions upon going to RRC_IDLE as specified in 5.3.11, with release cause 'RRC connection failure', upon which the procedure ends; |

[Table 18]

| |
|---|
| 1> configure lower layers to resume integrity protection for SRB1 using the previously configured algorithm and the $K_{RRCint}$ key immediately, i.e., integrity protection shall be applied to all subsequent messages received and sent by the UE, including the message used to indicate the successful completion of the procedure; |
| 1> configure lower layers to resume ciphering for SRB1 using the previously configured algorithm and, the $K_{RRCenc}$ key immediately, i.e., ciphering shall be applied to all subsequent messages received and sent by the UE, including the message used to indicate the successful completion of the procedure; |
| 1> release the measurement gap configuration indicated by the *measGapConfig,* if configured; |
| 1> release the MUSIM gap configuration indicated by the *musim-GapConfig,* if configured; |
| 1> if *ta-Report* is configured with value *enabled* and the UE supports TA reporting; |
| 2>indicate TA report initiation to lower layers; |
| 1> release the FR2 UL gap configuration indicated by the *ul-GapFR2-Config,* if configured; |
| 1> set the content of *RRCReestablishmentComplete* message as follows: |
| 2>if the UE has logged measurements available for NR and if the RPLMN is included in *plmn-IdentityList* stored in *VarLogMeasReport:* |
| 3>include the *logMeasAvailable* in the *RRCReestablishmentComplete* message; |
| 3>if Bluetooth measurement results are included in the logged measurements the UE has available for NR: |
| 4>include the *logMeasAvailableBT* in the *RRCReestablishmentComplete* message; |
| 3>if WLAN measurement results are included in the logged measurements the UE has available for NR: |

(continued)

| |
|---|
| 4>include the *logMeasAvailable WLAN* in the *RRCReestablishmentComplete* message;<br>2>if the *sigLoggedMeasType* in *VarLogMeasReport* is included:<br>    3>if T330 timer is running and the logged measurements configuration is for NR:<br>    4>set *sigLogMeasConfigAvailable* to *true* in the *RRCReestablishmentComplete* message;<br>    3>else:<br>    4>if the UE has logged measurements available for NR:<br>      5>set *sigLogMeasConfigAvailable* to *false* in the *RRCReestablishmentComplete* message;<br>2>if the UE has connection establishment failure or connection resume failure information available in *VarConnEstFailReport* or *VarConnEstFailReportList* and if the RPLMN is equal to *plmn-Identity* stored in *VarConnEstFailReport* or *VarConnEstFailReportList:*<br>    3>include *connEstFailInfoAvailable* in the *RRCReestablishmentComplete* message;<br>2>if the UE has radio link failure or handover failure information available in *VarRLF-Report* and if the RPLMN is included in *plmn-IdentityList* stored in *VarRLF-Report;* or<br>2>if the UE has radio link failure or handover failure information available in *VarRLF-Report* of TS 36.331 [10] and if the UE is capable of cross-RAT RLF reporting and if the RPLMN is included in *plmn-IdentityList* stored in *VarRLF-Report* of TS 36.331 [10]:<br>    3>include *rlf-InfoAvailable* in the *RRCReestablishmentComplete* message;<br>2>if the UE has successful handover information available in *VarSuccessHO-Report* and if the RPLMN is included in *plmn-IdentityList* stored in *VarSuccessHO-Report:*<br>    3>include *successHO-InfoAvailable* in the *RRCReestablishmentComplete* message;<br>1> submit the *RRCReestablishmentComplete* message to lower layers for transmission;<br>1> the procedure ends. |
| **5.3.7.6 T311 expiry**<br>Upon T311 expiry, the UE shall:<br>    1> if the procedure was initiated due to radio link failure or handover failure:<br>    2> set the *noSuitableCellFound* in the *VarRLF-Report* to *true*;<br>1> perform the actions upon going to RRC_IDLE as specified in 5.3.11, with release cause 'RRC connection failure'. |

Table 19 below is 'New Rel-18 WID on NR sidelink relay enhancements', corresponding to the prior art of the present disclosure.

[Table 19]

| |
|---|
| 3. Study the benefit and potential solutions for multi-path support to enhance reliability and throughput (e.g., by switching among or utilizing the multiple paths simultaneously) in the following scenarios [RAN2, RAN3]:<br>    A.A UE is connected to the same gNB using one direct path and one indirect path via 1) Layer-2 UE-to-Network relay, or 2) <u>via another UE (where the UE-UE inter-connection is assumed to be ideal), where the solutions</u> for 1) are to be reused for 2) without precluding the possibility of excluding a part of the solutions which is unnecessary for the operation for 2).<br>Note 3A: Study on the benefit and potential solutions are to be completed in RAN#98 which will decide whether/how to start the normative work.<br>Note 3B: UE-to-Network relay in scenario 1 reuses the Rel-17 solution as the baseline.<br>Note 3C: Support of Layer-3 UE-to-Network relay in multi-path scenario is assumed to have no RAN impact and the work and solutions are subject to SA2 to progress. |

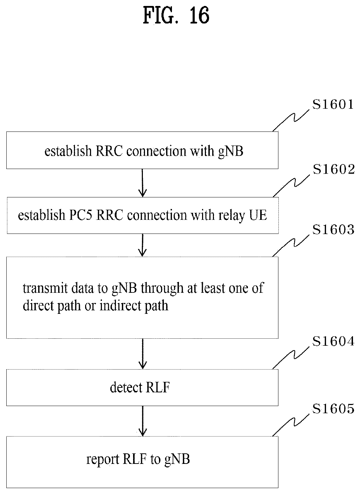

In relation to an operation of a relay UE according to an embodiment, a remote UE may establish a radio resource control (RRC) connection with a gNB (S1601 of FIG. 16). In addition, the remote UE may establish a PC5 RRC connection with the relay UE (S1602). The remote UE may transmit data to the gNB through at least one of a direct path or an indirect path (S1603). The remote UE may detect radio link failure (RLF) (S1604). The remote UE may report the RLF to the gNB (S1606).

Based on the RLF occurring on the indirect path, the remote UE may report to the gNB an ID of at least one candidate relay UE and a measurement result for the at least one candidate relay UE, together with the RLF report. The remote UE may receive an RRCReconfiguration message related to one of the at least one candidate relay UE from the gNB. The remote UE may establish a PC5 RRC connection with the one candidate relay UE based on the RRCReconfiguration message. The case where RLF occurs on the indirect path may be a case where RLF occurs on an SL between the remote UE and the relay UE, or a case where RLF occurs on a Uu link of the relay UE and thus the relay UE transmits a notification message. In addition, the measurement result for the at least one candidate relay UE may be equal to or greater than a preset threshold. The RLF may be reported via the direct path.

As described above, the remote UE may notify the gNB through the direct path that the RLF has occurred on the indirect path. Herein, the remote UE may also transmit the measurement result (e.g., reference signals received power (RSRP) or reference signal received quality (RSRQ)) for the candidate relay UE. Upon receipt of this, the gNB may configure a new relay UE by performing a new RRCReconfiguration. In this way, there is a technical effect that reporting the measurement result for the candidate path together may help with fast recovery.

In the present disclosure, a primary path may mean a path through which a connection is established or a path through which a control signal is transmitted/received.

When the indirect path is the primary path, upon occurrence of RLF on the indirect path, the remote UE may release the direct path and trigger relay reselection. That is, based on the indirect path where the RLF has occurred being the primary path, the remote UE may release the direct path and perform relay reselection.

On the contrary, when the direct path is the primary path, upon receipt of a notification message from the relay UE, the remote UE (performing a multi-path relay operation) may release an SL connection (or PC5-S/PC5-RRC). That is, based on the direct path being the primary path, the remote UE may release the connection with the relay UE.

When RLF occurs on a Uu link between the relay UE and the gNB, the relay UE may notify the remote UE of this by a notification message. Upon receipt of this, the remote UE may release or maintain the SL connection with the relay UE (depending on implementation of the remote UE). Even after the remote UE receives the notification message, the relay UE may maintain the SL connection (PC5-RRC/PC5-S) with the relay UE and perform SL communication.

When Uu RLF occurs on the Uu link, the relay UE may perform RRCReestablishment. After the RRCReestablishment is successful (after the relay UE transmits an RRCReestablishmentComplete message to the gNB), the relay UE may notify the remote UE of this by a PC5-RRC (or MAC CE) message. The message may include a cell ID (or gNB ID) with which the relay UE has successfully completed the RRCReestablishment. This notification may be transmitted only when the relay UE successfully performs the RRCReestablishment procedure to the same gNB (or a cell belonging to the same gNB) as the existing gNB. This is because the operation may be limited to the same gNB (or cell) in the multi-path operation.

Upon receipt of this notification message, the remote UE may inform the gNB that the relay UE has succeeded in the RRCReestablishment via the direct path (e.g., by SidelinkUEInformation). This is because the gNB may need to detect that the remote UE is now capable of the multi-path operation. In this case, the remote UE may need to include and report the new cell ID (or gNB ID) with which the relay UE has succeeded in the RRCReestablishment.

In the above description, a remote UE may include at least one processor; and at least one computer memory operatively connected to the at least one processor and storing instructions that, when executed, cause the at least one processor to perform operations. The operations may include: establishing an RRC connection with a gNB; establishing a PC5 RRC connection with a relay UE; transmitting data to the gNB through at least one of a direct path or an indirect path; detecting RLF; and reporting the RLF to the gNB. Based on the RLF occurring on the indirect path, the remote UE may report to the gNB an ID of at least one candidate relay UE and a measurement result for the at least one candidate relay UE, together with the RLF report. The remote UE may communicate with at least one of another UE, a UE related to an autonomous vehicle, a gNB, or a network.

Further, in a non-volatile computer-readable storage medium storing at least one computer program including instructions that, when executed by at least one processor, cause the at least one processor to perform operations for a UE, the operations may include: establishing an RRC connection with a gNB; establishing a PC5 RRC connection with a relay UE; transmitting data to the gNB through at least one of a direct path or an indirect path; detecting RLF; and reporting the RLF to the gNB. Based on the RLF occurring on the indirect path, the remote UE may report to the gNB an ID of at least one candidate relay UE and a measurement result for the at least one candidate relay UE, together with the RLF report.

Continuously, based on the RLF occurring on the direct path, the remote UE may report, to the gNB, at least one cell ID belonging to the same gNB as the remote UE and a measurement result related to the at least one cell ID, together with the RLF report. More specifically, when the RLF occurs on the direct path in a multi-path relay operation, the remote UE may report RLF of a Uu link through the indirect path (e.g., by SUI), and the gNB may perform a new RRC reconfiguration with the remote UE. The remote UE may also report a Uu link signal strength of a cell (and a neighbor cell) (belonging to the same gNB) (when reporting the RLF of the direct path).

In relation to the above new RRC reconfiguration, a reconfiguration message that the gNB configures for the remote UE may include preamble information for performing a contention-free RACH. Upon receipt of the preamble information, the remote UE may perform RRC reestablishment with the gNB through the direct path in a contention free manner, using the preamble configured by the gNB (or may transmit an RRCreconfigurationComplete message through the direct path). In this case, since the remote UE is capable of using the contention free RACH, latency may be reduced during the RRC reestablishment.

When RLF occurs on the Uu link, the remote UE may transmit an RRCReestablishmentRequest message to the gNB through the indirect path. In this case, the remote UE may measure a Uu direct path signal strength (of the same cell and/or a neighbor cell), and only when the direct signal strength of a cell belonging to the same gNB exceeds a set threshold, perform this operation (transmission of the RRCReestablishmentRequest message through the indirect path). Alternatively, the remote UE may transmit an RRCReestablishmentRequest message including a cell ID that it determines to be suitable for performing the RRCReestablishment procedure, to the gNB through the direct path.

This is done to inherit the existing operation in which the remote UE performs RRCReestablishmentRequest based on a Uu direct path signal strength measured by the remote UE. In addition, this RRCReestablishmentRequest message may include a signal indicating that it is a message for the RRCReestablishment procedure for the direct path of the remote UE. This is to distinguish it from a message in the case where the remote UE performs the RRC reestablishment procedure through the indirect path.

Upon receipt of the RRCReestablishmentRequest message from the remote UE through the indirect path, the gNB may transmit an RRCReestablishment message to the remote UE through the direct path. In this case, the RRCReestablishment message may include a cell ID and C-RNTI information (and/or) the L2 ID of the relay UE. Upon receipt of this, the remote UE may transmit an RRCRestablishmentComplete message (to the cell included in the RRCReestablishment message) through the direct path.

When the direct path is a primary link and RLF occurs on the direct path, the remote UE may release the indirect path and perform RRC reestablishment through the direct path.

When RLF occurs on the direct path, and thus the remote UE performs an RRC reestablishment procedure through the direct path, upon completion of reestablishment with the same cell (or a cell belonging to the same gNB), the remote UE may not release the indirect path even if the direct path is the primary link. However, upon completion of reestablishment with a different cell (or a cell belonging to a different gNB), the remote UE may release the indirect path with the existing remote UE. This operation may be limited to the case where the direct path is the primary link.

In the above technology, the same gNB/cell means a gNB/cell to which the remote UE is connected before RLF occurred. Alternatively, it may mean a gNB/cell connected through the indirect path.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

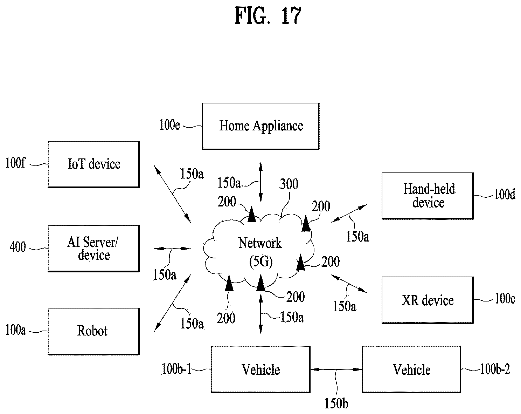

FIG. 17 illustrates a communication system 1 applied to the present disclosure.

Referring to FIG. 17, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

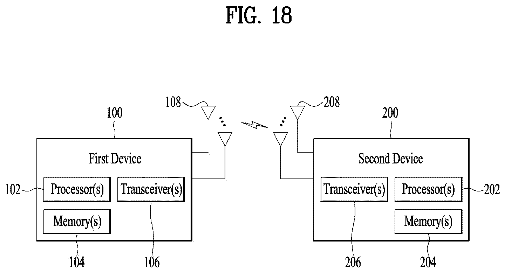

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

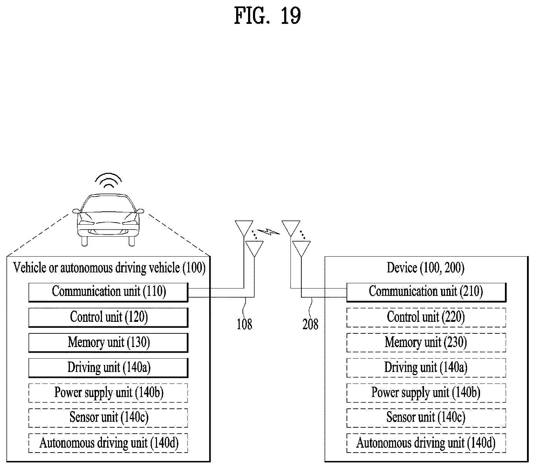

FIG. 19 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

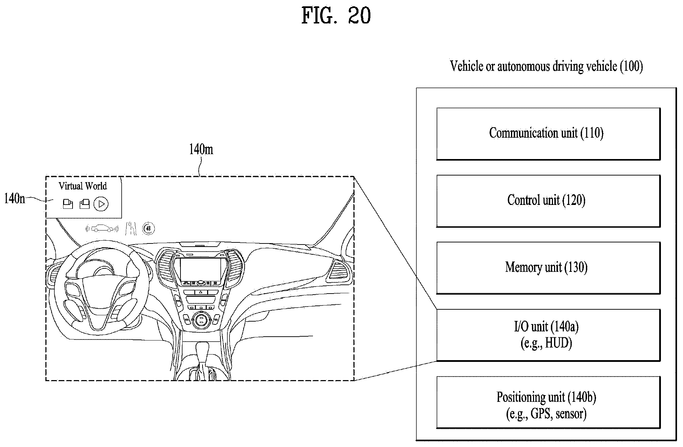

FIG. 20 illustrates a vehicle applied to the present disclosure. The vehicle may be implemented as a transport means, an aerial vehicle, a ship, etc.

Referring to FIG. 20, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

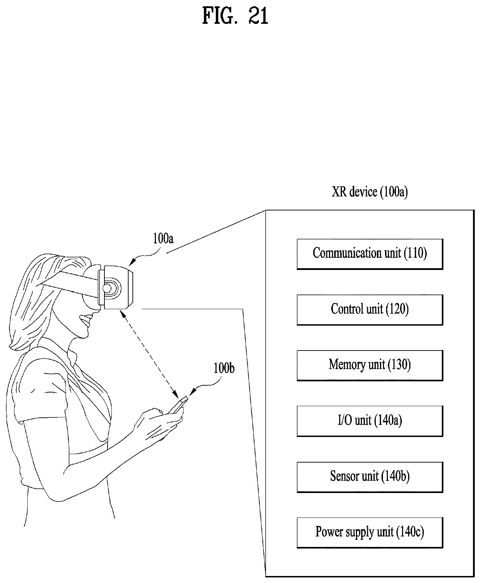

FIG. 21 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 21, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

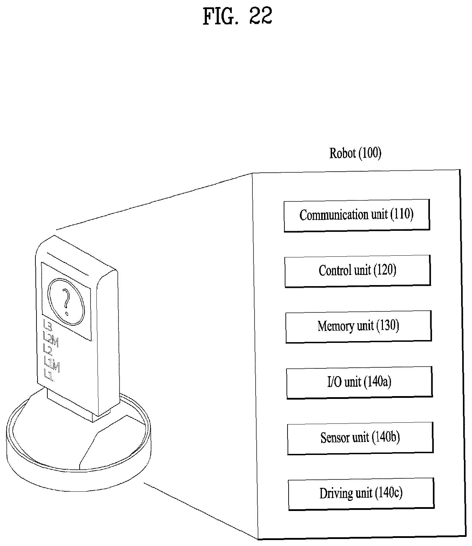

FIG. 22 illustrates a robot applied to the present disclosure. The robot may be categorized into an industrial robot, a medical robot, a household robot, a military robot, etc., according to a used purpose or field.

Referring to FIG. 22, a robot 100 may include a communication unit 110, a control unit 120, a memory unit 130, an I/O unit 140a, a sensor unit 140b, and a driving unit 140c.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

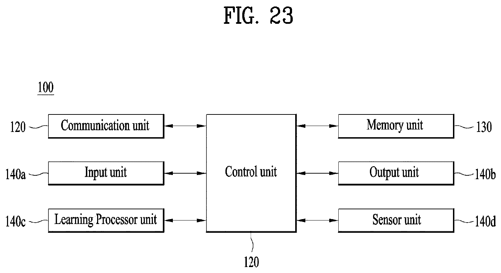

FIG. 23 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 23, an AI device 100 may include a communication unit 110, a control unit 120, a memory unit 130, an I/O unit 140a/140b, a learning processor unit 140c, and a sensor unit 140d.

The communication unit 110 may transmit and receive wired/radio signals (e.g., sensor information, user input, learning models, or control signals) to and from external devices such as other AI devices (e.g., 100x, 200, or 400 of FIG. 17) or an AI server (e.g., 400 of FIG. 17) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 17). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 17). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

## INDUSTRIAL APPLICABILITY

The above-described embodiments of the present disclosure are applicable to various mobile communication systems.

## Claims

1. A method of operating a remote user equipment (UE) related to multi-path relay in a wireless communication system, the method comprising:

   establishing a radio resource control (RRC) connection with a base station (BS) by the remote UE;
   establishing a PC5 RRC connection with a relay UE by the remote UE;
   transmitting data to the BS through at least one of a direct path or an indirect path by the remote UE;
   detecting radio link failure (RLF) by the remote UE; and
   reporting the RLF to the BS by the remote UE,
   wherein based on the RLF occurring on the indirect path, the remote UE reports to the BS an ID of at least one candidate relay UE and a measurement result for the at least one candidate relay UE, together with the RLF report.

2. The method of claim 1, wherein the remote UE receives an RRCReconfiguration message related to one of the at least one candidate relay UE from the BS.

3. The method of claim 1, wherein the remote UE establishes a PC5 RRC connection with the one candidate relay UE based on the RRCReconfiguration message.

4. The method of claim 1, wherein the measurement result for the at least one candidate relay UE is equal to or greater than a preset threshold.

5. The method of claim 1, wherein the RLF is reported via the direct path.

6. The method of claim 1, wherein based on the indirect link on which the RLF occurs being a primary path, the remote UE releases the direct link and performs relay reselection.

7. The method of claim 6, wherein based on the direct link being the primary path, the remote UE releases the connection with the relay UE.

8. The method of claim 1, wherein the primary path is a path through which the remote UE establishes the PC5 RRC connection or a path through which the remote UE transmits/receives a control signal.

9. The method of claim 1, wherein the measurement result is one of reference signal received power (RSRP) or reference signal received quality (RSRQ).

10. The method of claim 1, wherein based on the RLF occurring on the direct path, the remote UE reports to the BS at least one cell ID belonging to the same gNB as the remote UE and a measurement result related to the at least one cell ID, together with the RLF report.

11. A remote user equipment (UE) in a wireless communication system, comprising:

   at least one processor; and
   at least one computer memory operatively connected to the at least one processor, and storing instructions that, when executed, cause the at least one processor to perform operations,
   wherein the operations include:

   establishing a radio resource control (RRC) connection with a base station (BS);
   establishing a PC5 RRC connection with a relay UE;
   transmitting data to the BS through at least one of a direct path or an indirect path;
   detecting radio link failure (RLF); and
   reporting the RLF to the BS, and
   wherein based on the RLF occurring on the indirect path, the remote UE reports to the BS an ID of at least one candidate relay UE and a measurement result for the at least one candidate relay UE, together with the RLF report.

12. The remote UE of claim 11, wherein the remote UE communicates with at least one of another UE, a UE related to an autonomous vehicle, a BS, or a network.

13. A non-volatile computer-readable storage medium storing at least one computer program including instructions that, when executed by at least one processor, cause the at least one processor to perform operations for a UE, wherein the operations include:

   establishing a radio resource control (RRC) connection with a base station (BS);
   establishing a PC5 RRC connection with a relay UE;
   transmitting data to the BS through at least one of a direct path or an indirect path;
   detecting radio link failure (RLF); and
   reporting the RLF to the BS, and
   wherein based on the RLF occurring on the indirect path, the remote UE reports to the BS an ID of at least one candidate relay UE and a measurement result for the at least one candidate relay UE, together with the RLF report.

FIG. 1

Evolution to 5G,
while maintaining backward compatibility

Advanced use cases
5G V2X R16

Enhanced safety
C-V2X R14/15

Higher throughput
Higher reliability

Wideband raging
and positioning
Lower latency

Basic safety
802.11p or C-V2X R14

Enhanced range and reliability

| Vehicle Platooning | Extended Sensors |
| Remote Driving | Advanced Driving |

# FIG. 2

FIG. 3

(a)

(b)

# FIG. 4

# FIG. 5

| gNB |
| --- |
| Inter-Cell RRM |
| RB Control |
| Connection Mobility Control |
| Radio Access Control |
| Measurement Configuration and Provisioning |
| Dynamic Resource Allocation (Scheduler) |

NG-RAN

| AMF |
| --- |
| NAS Security |
| Idle-State Mobility Processing |

| SMF |
| --- |
| UE IP Address Allocation |
| PDU Session Control |

| UPF |
| --- |
| Mobility Anchoring |
| PDU Processing |

Internet

5GC

# FIG. 6

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 7

Resource Grid

Carrier
( up to 3300 subcarriers,
i.e., 275 RBs )

A BWP

1 RB
= 12 subcarriers

1 RE

1 subcarrier

1 symbol

k = 0

1 = 0 · · ·

# FIG. 8

PU5-U

(a)

PU5-C

(b)

# FIG. 9

UE A

SDAP — SDAP

PDCP — PDCP

RLC — RLC

MAC — MAC

PHY — PHY

UE B

PU5-U

(a)

UE A

RRc — RRC

PDCP — PDCP

RLC — RLC

MAC — MAC

PHY — PHY

UE B

PU5-U

(b)

FIG. 10

# FIG. 11

(a)                                    (b)

## FIG. 12

| Remote UE | Relay UE | gNB |
|-----------|----------|-----|

S1200 — Discovery

S1201 — PC5 Connection Establishment

S1202 — RRC Setup Request

S1203 — RRC Setup

S1204 — Prepare PC5 and Uu RLC channel for SRB1

S1205 — RRC Setup Complete

S1206 — Security Mode Command

S1207 — Security Mode Complete

S1208 — RRC Reconfiguration

S1209 — RR Reconfiguration Complete

S1210 — Prepare PC5 and Uu RLC channel for SRB2/DRB

FIG. 13

FIG. 14

(a)

(b)

FIG. 15

## FIG. 16

establish RRC connection with gNB  S1601

establish PC5 RRC connection with relay UE  S1602

transmit data to gNB through at least one of direct path or indirect path  S1603

detect RLF  S1604

report RLF to gNB  S1605

# FIG. 17

100e — Home Appliance

100f — IoT device

150a

150a — 300

200

200

400 — AI Server/device

Network (5G)

150a

Hand-held device — 100d

150a

200

XR device — 100c

200

100a — Robot

150a

200

150a

150a

100b-1 — Vehicle

Vehicle — 100b-2

150b

FIG. 18

# FIG. 19

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 20

Vehicle or autonomous driving vehicle (100)

Communication unit (110)

Control unit (120)

Memory unit (130)

I/O unit (140a)
(e.g., HUD)

Positioning unit (140b)
(e.g., GPS, sensor)

140m

Virtual World

140n

FIG. 21

XR device (100a)

100a

100b

Communication unit (110)

Control unit (120)

Memory unit (130)

I/O unit (140a)

Sensor unit (140b)

Power supply unit (140c)

FIG. 22

Robot (100)

Communication unit (110)

Control unit (120)

Memory unit (130)

I/O unit (140a)

Sensor unit (140b)

Driving unit (140c)

FIG. 23

## INTERNATIONAL SEARCH REPORT

| International application No. |
|---|
| **PCT/KR2023/013720** |

**A. CLASSIFICATION OF SUBJECT MATTER**

**H04W 76/19**(2018.01)i; **H04W 76/14**(2018.01)i; **H04W 76/18**(2018.01)i; **H04W 24/08**(2009.01)i; **H04W 88/04**(2009.01)i

According to International Patent Classification (IPC) or to both national classification and IPC

**B. FIELDS SEARCHED**

Minimum documentation searched (classification system followed by classification symbols)

H04W 76/19(2018.01); G01S 5/02(2010.01); H04W 28/02(2009.01); H04W 40/22(2009.01); H04W 64/00(2009.01); H04W 68/02(2009.01); H04W 76/18(2018.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리모트 단말(remote UE), 중계 단말(relay UE), 인다이렉트 경로(indirect path), 라디오 링크 실패(RLF), 후보 릴레이(candidate relay)

**C. DOCUMENTS CONSIDERED TO BE RELEVANT**

| Category* | Citation of document, with indication, where appropriate, of the relevant passages | Relevant to claim No. |
|---|---|---|
| X | HUAWEI et al. Discussion on Rel-18 multi-path via SL relay and UE aggregation. R2-2208488, 3GPP TSG-RAN WG2 Meeting #119e electronic. [Online]. 10 August 2022.<br>See pages 4-5 and 7; and figures 1 and 4. | 1-13 |
| A | KR 10-2019-0127561 A (KT CORPORATION) 13 November 2019 (2019-11-13)<br>See claims 1-2. | 1-13 |
| A | US 2022-0217612 A1 (MEDIATEK SINGAPORE PTE. LTD.) 07 July 2022 (2022-07-07)<br>See claim 1. | 1-13 |
| A | WO 2021-034126 A1 (LG ELECTRONICS INC.) 25 February 2021 (2021-02-25)<br>See paragraphs [0662]-[0737]; and figures 16-18. | 1-13 |
| A | WO 2022-059876 A1 (LG ELECTRONICS INC.) 24 March 2022 (2022-03-24)<br>See claim 1. | 1-13 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2023** | **21 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013720**

| Patent document cited in search report | | | Publication date (day/month/year) | Patent family member(s) | | | Publication date (day/month/year) |
|---|---|---|---|---|---|---|---|
| KR | 10-2019-0127561 | A | 13 November 2019 | WO | 2019-212249 | A1 | 07 November 2019 |
| US | 2022-0217612 | A1 | 07 July 2022 | CN | 113826364 | A | 21 December 2021 |
| | | | | WO | 2021-102671 | A1 | 03 June 2021 |
| WO | 2021-034126 | A1 | 25 February 2021 | | None | | |
| WO | 2022-059876 | A1 | 24 March 2022 | KR | 10-2023-0058446 | A | 03 May 2023 |

Form PCT/ISA/210 (patent family annex) (July 2022)